# EUROPEAN PATENT APPLICATION

(11) **EP 1 582 866 A1**
(43) Date of publication of application: **05.10.2005**
(21) Application number: 05251906.3
(22) Date of filing: 29.03.2005
(51) Int. Cl.: G01N 27/407, G01N 27/419

(54) **Solid electrolyte gas sensor element**

(30) Priority: 29.03.2004 JP 2004096345
(71) Applicant: NGK INSULATORS, LTD., Nagoya-City, Aichi Pref. 467-8530 (JP)
(72) Inventor: Kurachi, Hiroshi, Nagoya City Aichi-ken 467-8530 (JP); Sasaki, Yuichi, Nagoya City Aichi-ken 467-8530 (JP); Miyashita, Takeya, Nagoya City Aichi-ken 467-8530 (JP)
(74) Representative: Paget, Hugh Charles Edward

(57) **Abstract**

A gas sensor element (2) having a laminar structure including first and second solid electrolyte layers (4a, 4c) and a solid electrolyte spacer layer (4b) which are laminated on each other, with the spacer layer being interposed between the first and second solid electrolyte layers, the laminar structure having a buffer space (8), a first space (10) and a second space (12) which are formed between the first and second solid electrolyte layers, the laminar structure further having a gas inlet (16) through which the external measurement gas is introduced into the buffer space, a first diffusion controlling passage (20) through which the external measurement gas is introduced into the buffer space from the gas inlet, a second diffusion controlling passage (24) through which an atmosphere in the buffer space is introduced into the first space, a third diffusion controlling passage (32) through which an atmosphere in the first space is introduced into the second space.

## Description

This application is based on Japanese Patent Application No. 2004-096345 filed on March 29, 2004, the contents of which are incorporated hereinto by reference.

### BACKGROUND OF THE INVENTION

### Field of the Invention

The present invention relates in general to a gas sensor element, and more particularly to a gas sensor element suitably used for a gas sensor operable to measure amounts of oxides such as NO, NO₂, SO₂, CO₂ and H₂O, and combustible gases such as CO and CnHm, which are contained in vehicular exhaust emissions and the atmosphere, for example.

### Discussion of Related Art

There have been proposed a variety of measuring methods and devices for detecting the concentrations of desired gas components such as those indicated above, which are contained in a measurement gas. JP-8-271476A (Patent Document 1) discloses an example of a measuring device arranged to measure the amount of a desired gas component contained in the measurement gas and including bound oxygen, by measuring the amount of oxygen generated by reduction or decomposition of the desired gas component. Described in detail, this measuring device uses a gas sensor element operable to detect the concentration of the desired gas component in the measurement gas. The gas sensor element has a first internal space into which the measurement gas is introduced through a first diffusion controlling passage, and a second internal space into which an atmosphere in the first internal space is introduced through a second diffusion controlling passage. The gas sensor element includes first oxygen pumping means operable to control an oxygen partial pressure in the first internal space, second oxygen pumping means operable to pump the oxygen out of the second internal space, and current detecting means operable to detect an amount of a pumping current flowing through the second oxygen pumping means during its pumping operation. The gas sensor element detects the amount of the desired gas component on the basis of the pumping current detected by the current detecting means.

The gas sensor element disclosed in the Patent Document 1 identified above has a laminar structure consisting of a plurality of solid electrolyte layers which have respective suitable thickness values and are laminated on each other so as to form an integral unit. In this laminar structure of the gas sensor element, the first and second diffusion controlling passages and the first and second internal spaces are formed in series with each other between the two solid electrolyte layers. The gas sensor element has a gas inlet through which the external measurement gas is introduced into the first and second internal spaces one after another, under predetermined resistances to diffusion of the gas.

JP-A-11-237362 (Patent Document 2) and JP-2000-28576 (Patent Document 3) disclose a gas sensor element which is basically identical in construction with the gas sensor element disclosed in the Patent Document 1 and which is arranged to improve the accuracy of measurement by detecting electrodes, by reducing an influence of pulsation of an exhaust gas pressure, which takes place in the measurement gas. This gas sensor element has an elongate laminar structure including at least a first solid electrolyte layer, a solid electrolyte spacer layer having a suitable thickness, and a second solid electrolyte layer, which are laminated on each other such that the spacer layer is interposed between the first and second solid electrolyte layers. The laminar structure has a buffer space, a first space and a second space which are formed between the first and second solid electrolyte layers and arranged in the order of description in the direction from the distal end of the gas sensor element toward the proximal end of the same, so that the external measurement gas is introduced into the buffer space through a first diffusion controlling passage, and an atmosphere in the buffer space is introduced into the first space through a second diffusion controlling passage, while an atmosphere in the first space is introduced into the second space through a third diffusion controlling passage.

However, those known gas sensor elements of the laminar structure proposed in the documents identified above may suffer from longitudinal or lateral cracking of the outer solid electrolyte layer which defines the internal spaces and which are exposed to the measurement gas. The longitudinal crack extends from the distal end of the gas sensor element in its longitudinal direction, while the lateral crack extends in the lateral or transverse direction of the gas sensor elements. These cracks may be caused by a variation of the temperature of the measurement gas such as an exhaust emission, a variation of the flow rate of the measurement gas, repeated heating and cooling of the element, and a thermal stress due to self-heating by a heater incorporated in the element. The cracking has an adverse effect on the measurement of the measurement gas, namely, causes an error of the measurement, and has a risk of electric circuit defects such as breakage of lead wires and the heater.

### SUMMARY OF THE INVENTION

The present invention was made in view of the background art discussed above. It is an object of the present invention to provide a gas sensor element of a laminar structure which is constructed to reduce or eliminate a risk of the cracking encountered in the prior art.

The object indicated above may be achieved according to any one of the following modes of the present invention, each of which is numbered like the appended claims and depends from the other mode or modes, where appropriate, for easier understanding of technical features disclosed herein and possible combinations of those features. However, it is to be understood that the invention is not limited to those technical features or combinations thereof, and that any one of a plurality of technical features described below with respect to any one mode of the invention may be a subject matter of the present invention, without the other technical feature or features being combined with the above-indicated one feature.

(1) A gas sensor element having a generally elongate laminar structure including at least a first solid electrolyte layer, a second electrolyte layer and a spacer layer formed of a solid electrolyte which are laminated on each other, with the spacer layer being interposed between the first and second solid electrolyte layers, the laminar structure having internal spaces which are formed between the first and second solid electrolyte layers and which include a buffer space, a first space and a second space that are arranged in the order of description in a direction from a distal end of the gas sensor element toward a proximal end of the same, the laminar structure further having a gas inlet which is formed at the distal end and through which an external measurement gas is introduced into the buffer space, a first diffusion controlling passage in the form of a slit through which the external measurement gas is introduced into the buffer space from the gas inlet, a second diffusion controlling passage in the form of a slit through which an atmosphere in the buffer space is introduced into the first space, and a third diffusion controlling passage in the form of a slit through which an atmosphere in the first space is introduced into the second space, the gas sensor element being characterized in that the buffer space and the first and second spaces have a thickness substantially equal to a thickness of the spacer layer and extend in a longitudinal direction of the gas sensor element, with a predetermined width dimension, the generally elongate laminar structure including a first partition wall which substantially separates the gas inlet and the buffer space from each other and which is integrally fixed to the first solid electrolyte layer, the first partition wall and the second solid electrolyte layer cooperating to define therebetween the first diffusion controlling passage which extends in a direction of width of the gas sensor element.

In the gas sensor element according to the above-described mode of this invention, the buffer space and the first and second spaces are formed as the internal spaces between the first solid electrolyte layer and the second solid electrolyte layers, and have the thickness substantially equal to the thickness of the spacer layer. Further, the first partition wall which substantially separates the gas inlet at the distal end of the element and the buffer space in the distal end portion of the element from each other is integrally fixed to the first solid electrolyte layer, so that the mechanical strength of the first electrolyte layer is effectively improved, making it possible to reduce or eliminate a risk of cracking of the first solid electrolyte layer.

(2) The gas sensor element according to the above-described mode (1), wherein the laminar structure further has a plugging-preventive space which is formed between the first and second solid electrolyte layers and which has a thickness substantially equal to the thickness of the spacer layer, the plugging-preventive space being open through the gas inlet to an external space in which the external measurement gas exists, the first partition wall substantially separating the plugging-preventive space and the buffer space from each other.

In the gas sensor element according to the above-described mode (2) of the invention wherein the plugging-preventive space is formed between the gas inlet and the buffer space, the first partition wall which substantially separating the plugging-preventive space and the buffer space and which is integrally fixed to the first solid electrolyte layer is effective to improve the mechanical strength of the first solid electrolyte layer, and to reduce a risk of cracking of the first solid electrolyte layer even in the presence of the plugging-preventive space formed in the distal end portion of the gas sensor element.

(3) The gas sensor element according to the above-described mode (1) or (2), wherein the laminar structure further includes a second partition wall which substantially separates the buffer space and the first space from each other and which is integrally fixed to the first solid electrolyte layer, the second partition wall and the second solid electrolyte layer cooperating to define therebetween the second diffusion controlling passage which extends in the direction of width of the gas sensor element.

(4) The gas sensor element according to any one of the above-described modes (1)-(3), wherein the laminar structure further includes a third partition wall which substantially separates the first and second spaces from each other and which is integrally fixed to the first solid electrolyte layer, the third partition wall and the second solid electrolyte layer to cooperate therebetween the third diffusion controlling passage which extends in the direction of with of the gas sensor element.

In the gas sensor element according to the above-described mode (3) or (4) of this invention, the second partition wall substantially separating the buffer space and the first space from each other, and/or the third partition wall substantially separating the first and second spaces from each other is/are integrally fixed to the first solid electrolyte layer, like the first partition wall, so that these second and third partition walls cooperates with the first partition wall to increase the mechanical strength of the first solid electrolyte layer, making it possible to more effectively reduce or eliminate a risk of cracking of the first solid electrolyte layer.

(5) The gas sensor element according to any one of the above-described modes (1)-(4), wherein at least one ceramic layer is laminated on one side of the second solid electrolyte layer which is remote from the internal spaces, a total thickness value of the second solid electrolyte layer and the at least one ceramic layer being larger than a thickness of the first solid electrolyte layer.

In the gas sensor element according to the above-described mode (5) wherein the thickness of the first solid electrolyte layer is smaller than the total thickness value of the first solid electrolyte layer and the at least one ceramic layer, the first partition wall integrally fixed to the first solid electrolyte layer effectively reduces or eliminates a risk of cracking of the relatively thin first solid electrolyte layer, which would be likely to suffer from cracking, in the absence of the first partition wall.

(6) The gas sensor element according to any one of the above-described modes (1)-(5), wherein the laminar structure further includes a layer of a heater which is located on one side of the second solid electrolyte layer which is remote from the internal spaces and which is electrically operated to heat at least portions of the first and second solid electrolyte layers and the spacer layer which define the first and second spaces.

In the gas sensor element according to the above-described mode (6) wherein the heater layer is provided on one side of the second solid electrolyte layer which is remote from the first solid electrolyte layer, the first partition wall integrally fixed to the first solid electrolyte layer effectively reduces or eliminates a risk of cracking of the thin first solid electrolyte layer, which would be likely to suffer from cracking due to a thermal stress generated upon heating of the gas sensor element by the heater, in the absence of the first partition wall.

(7) The gas sensor element according to any one of the above-described modes (1)-(6), wherein the laminar structure has a first inner pumping electrode and a first outer pumping electrode which are formed on respective inner and outer opposite surfaces of a portion of the first solid electrolyte layer which partially defines the first space, the first solid electrolyte layer and the first inner and outer pumping electrodes cooperating to constitute main pumping means for performing a pumping action, with a control voltage being applied between the first inner and outer pumping electrodes, with respect to oxygen contained in the atmosphere introduced into the first space through the buffer space.

In the gas sensor element according to the above-described mode (7), the main pumping means is constituted by the first solid electrolyte layer and the first inner and outer pumping electrodes formed on the respective inner and outer opposite surfaces of a portion of the first solid electrolyte layer which partially defines the first space. The first partition wall integrally fixed to the first solid electrolyte layer effectively reduces or eliminates a risk of cracking of the first solid electrolyte layer, which would likely to suffer from cracking around the first outer pumping electrode, in the absence of the first partition wall.

(8) The gas sensor element according to any one of the above-described modes (1)-(7), wherein the laminar structure is provided with a second inner pumping electrode and a second outer pumping electrode which are respectively formed inside and outside of the second space, the second inner and outer pumping electrodes cooperating with at least the first solid electrolyte layer to constitute measurement pumping means for performing a pumping action, with respect to oxygen generated by reduction or decomposition of a desired gas component contained in the atmosphere which has been introduced from the first space into the second space.

(9) The gas sensor element according to any one of the above-described modes (1)-(7), wherein the laminar structure is provided with an inner measuring electrode and an outer measuring electrode which are respectively formed inside and outside of the second space, the inner and outer measuring electrodes cooperating with at least the second solid electrolyte layer to constitute oxygen-partial-pressure detecting means operable to generate an electromotive force corresponding to a difference between an amount of oxygen generated by reduction or decomposition of a desired gas component contained in the atmosphere which has been introduced from the first space into the second space, and an amount of oxygen contained in a reference gas.

(10) The gas sensor element according to the above-described mode (7), wherein the laminar structure is provided with a pair of auxiliary pumping electrodes which are respectively formed inside and outside of the second space, the pair of auxiliary pumping electrodes cooperating with at least the first solid electrolyte layer to constitute auxiliary pumping means for performing a pumping action, with an auxiliary pumping current applied between the pair of auxiliary electrodes, with respect to oxygen contained in the measurement gas which has been subjected to the pumping action of the main pumping means.

(11) A nitrogen oxide sensor including a gas sensor element as set forth in any one of the above-described modes (1)-(10), for measuring an amount of a nitrogen oxide component contained in an external measurement gas.

The nitrogen oxide sensor according to the above mode (11) of the present invention, which includes the gas sensor element of the invention described above, has a prolonged service life, with a reduced or substantially no risk of cracking of the first solid electrolyte layer, permitting accurate measurement of the amount of a nitrogen oxide component contained in the external measurement gas.

### BRIEF DESCRIPTION OF THE DRAWINGS

The above and other objects, features, advantages and technical and industrial significance of the present invention will be better understood by reading the following detailed description of a presently preferred embodiment of the invention, when considered in connection with the accompanying drawings, in which:
Fig. 1 is an elevational view in longitudinal cross section showing one embodiment of a gas sensor element of the present invention, the view being taken along line 1-1 of Fig. 2;
Fig. 2 is a plan view showing a distal end portion of the gas sensor element shown in Fig. 1;
Fig. 3 is a cross sectional view taken along line 3-3 of Fig. 1;
Fig. 4 is a left-side elevational view of the gas sensor element shown in Fig. 1;
Fig. 5 is a cross sectional view taken along line 5-5 of Fig. 1;
Fig. 6 is a cross sectional view taken along line 6-6 of Fig. 1;
Fig. 7A and Fig. 7B are graphs indicating cracking of the gas sensor element of the present invention, as compared with cracking of a comparative example, when the gas sensor elements were exposed to blows of chilled air, the graph of Fig. 7A indicating a relationship between a fraction of defective of the gas sensor element and the flow rate of the chilled air, at position A in Fig. 2, while the graph of Fig. 7B indicating a relationship between the fraction of defective and the flow rate of the chilled air, at position B in Fig. 2; and
Fig. 8 is an elevational view in longitudinal cross section showing an example of a nitrogen oxide sensor using the gas sensor element of the present invention.

### DETAILED DESCRIPTION OF THE PREFERRED EMBODIMENT

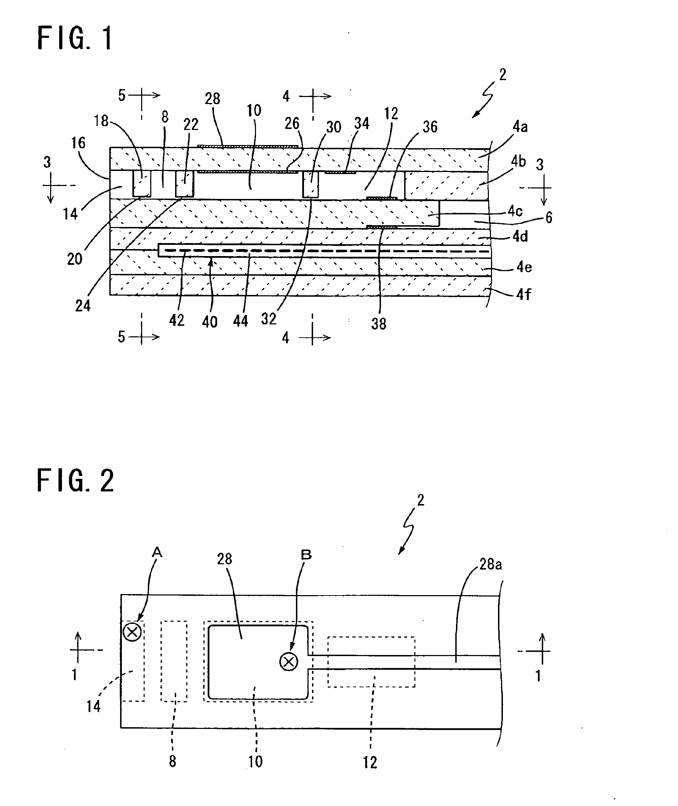

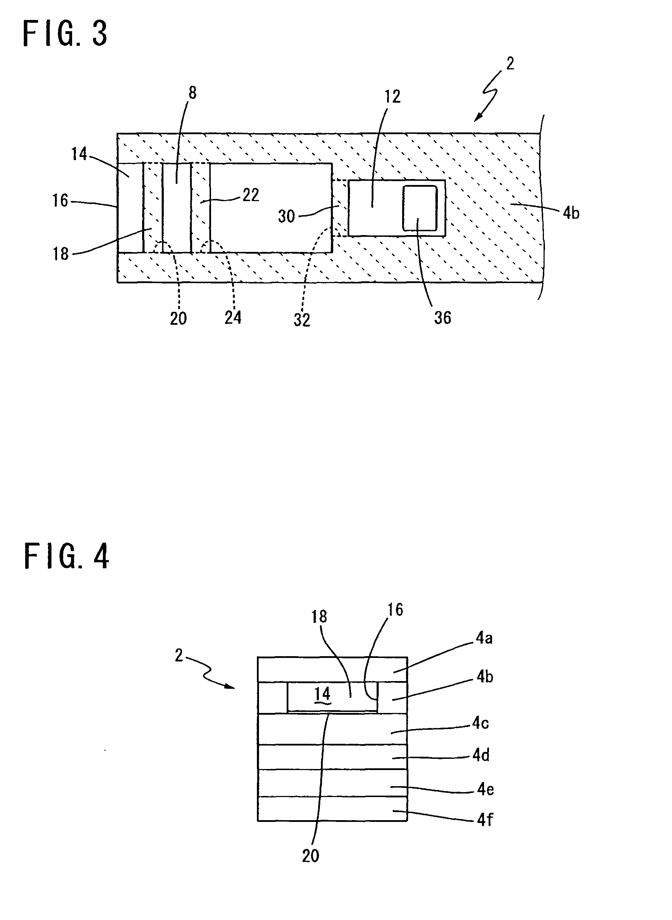

Referring first to Figs. 1-6 of the accompanying drawings, there will be described a gas sensor element 2 constructed according to one embodiment of this invention. Figs. 1-6 schematically show the construction of a distal end portion of the gas sensor element 2.

As shown in Figs. 1 and 4-6, the gas sensor element 2 has a generally elongate laminar plate-like structure which has a relatively small width and a relatively large length and which includes a plurality of dense and air-tight oxygen-ion conductive solid electrolyte layers 4a, 4b, 4c, 4d, 4e and 4f, which are laminated on each other so as to form an integral unit. The solid electrolyte layers 4a-4f are formed of a known oxygen-ion conductive solid electrolyte material such as zirconia ceramics. The integral laminar sensor element 2 is formed by firing a green laminar structure of unfired solid electrolyte layers corresponding to the solid electrolyte layers 4a-4f.

In this integral laminar sensor element 2, a first solid electrolyte layer in the form of the solid electrolyte layer 4a, a spacer layer in the form of the solid electrolyte layer 4b, and a second solid electrolyte layer in the form of the solid electrolyte layer 4c are laminated on each other, with the solid electrolyte layer 4b being interposed between the solid electrolyte layers 4a, 4c, such that the solid electrolyte layers 4a, 4b, 4c cooperate to define internal spaces which are located between the solid electrolyte layers 4a, 4c and have a thickness equal to the thickness of the solid electrolyte layer 4b, as shown in Fig. 1. Namely, the internal spaces are arranged in the longitudinal direction of the laminar sensor element 2. The laminar sensor element 2 further has a reference-gas space in the form of a reference-air inlet passage 6 which is formed between the solid electrolyte layer 4b and the solid electrolyte layer 4d, independently of the internal spaces described above, and so as to extend in the longitudinal direction of the sensor element 2. The reference-air inlet passage 6 has a thickness equal to the thickness of the solid electrolyte layer 4c. As in the known sensor element, this reference-air inlet passage 6 is formed in the proximal end portion of the sensor element 2, and open to the atmosphere.

The above-described internal spaces formed between the two solid electrolyte layers 4a, 4c of the sensor element 2 include a buffer space 8, a first space 10 and a second space 12, which are arranged in the order of description in the longitudinal direction of the sensor element 2. These buffer space 8 and first and second spaces 10, 12 have rectangular shapes and predetermined width dimensions, as seen in the plan view of Fig. 2. The internal spaces further include a plugging-preventive space 14 which is formed between the solid electrolyte layers 4a, 4c and has a thickness equal to that of the solid electrolyte layer 4b, like the spaces 8, 10, 12. This plugging-preventive space 14 is formed in the distal end portion of the sensor element 2 which is remote from the reference-air inlet passage, such that the plugging-preventive space 14 is open to an external measurement gas. The open end of the plugging-preventive space 14 provides a gas inlet 16 through which the measurement gas is introduced into the sensor element 2.

The plugging-preventive space 14 and the buffer space 8 are substantially separated from each other by a first partition wall 18 which is a portion of the solid electrolyte layer 4b. The first partition wall 18 is integrally fixed at its upper end (as seen in Fig. 1) to the solid electrolyte layer 4a, and is spaced at its lower end from the solid electrolyte layer 4c, by a predetermined small distance, such that the lower end face of the first partition wall 18 cooperates with the solid electrolyte layer 4c to define a slit which has substantially the same width dimension as the buffer space 8 and which functions as a first diffusion controlling passage 20. The measurement gas introduced into the plugging-preventive space 14 through the gas inlet 16 is introduced into the buffer space 8 through the first diffusion controlling passage 20, under a predetermined diffusion resistance determined by the passage 20.

The buffer space 8 provided in the present sensor element 2 has the following functions and advantages. That is, where the measurement gas is an exhaust emission produced by an engine of a vehicle, for example, oxygen contained in the external measurement gas would be introduced through the gas inlet 16 into the first space 10 (first and second spaces 10, 12) of the sensor element 2, at a considerably high velocity due to pulsation of the exhaust gas pressure, in the absence of the buffer space 8. In the present sensor element 2 according to the present embodiment, the oxygen in the external measurement gas is not introduced directly into the first space 10, but is introduced into the first space 10 through the buffer space 8, so that a relatively high rate of variation of the oxygen concentration due to the pulsation of the exhaust gas pressure is effectively absorbed by the buffer space 8, with a result of substantial elimination of an adverse influence of the pulsation of the exhaust gas pressure on the accuracy of measurement by the sensor element 2. That is, the provision of the buffer space 8 is effective to improve the correlation between the amount of oxygen pumping by oxygen pumping means and the oxygen concentration of the measurement gas, not only leading to an improvement of the accuracy of measurement by the sensor element 2, but also making it possible to use the internal spaces 10, 12 for detecting the air/fuel ratio of the exhaust emission from the engine, for example, as well as for detecting the amounts of desired gas components contained in the measurement gas.

The plugging-preventive space 14 formed in the distal end portion of the sensor element 2 is provided for the purpose of preventing the plugging of the buffer space 8 at its inlet end with particulate matters such as soot and oil combustion residue contained in the measurement gas introduced into the buffer space 8 through the gas inlet 16. Accordingly, the plugging-preventive space 14 permits accurate measurement of the desired gas components for a prolonged period of time.

However, the provision of the buffer space 8 and the plugging-preventive space 14 in the distal end portion of the sensor element 2 would reduce the mechanical strength of the distal end portion, and in particular cause undesirable cracking of the outer solid electrolyte layer 4a (upper electrolyte layer 4a as seen in Fig. 1), in the absence of a unique arrangement associated with the buffer space 8. Described in detail, the buffer space 8 has the thickness equal to that of the solid electrolyte layer 4b serving as the spacer layer interposed between the two solid electrolyte layers 4a, 4c. In other words, the buffer space 8 is formed as a space made by a partial absence of the solid electrolyte layer 4b. In addition to the buffer space 8, the first partition wall 18 is integrally fixed at its upper end to the outer solid electrolyte layer 4a, as mentioned above, so that the mechanical strength of the first electrolyte layer is effectively improved, making it possible to reduce or eliminate a problem of cracking of the first solid electrolyte layer.

In the present sensor element 2, the buffer space 8 and the first space 10 is substantially separated from each other by a second partition wall 22, which is a portion of the solid electrolyte layer 4b, and which is integrally fixed at its upper end to the solid electrolyte layer 4a and spaced at its lower end from the solid electrolyte layer 4c, by a predetermined small distance, like the first partition wall 18, such that the lower end face of the second partition wall 22 cooperates with the solid electrolyte layer 4c to define a slit which functions as a second diffusion controlling passage 24. This second partition wall 22 also contributes to an improvement of the mechanical strength of the outer solid electrolyte layer 4a.

An atmosphere (measurement gas) existing in the buffer space 8 as a result of introduction of the measurement gas thereinto through the first diffusion controlling passage 20 is introduced into the first space 10 through the second diffusion controlling passage 24 under a predetermined diffusion resistance determined by the passage 24. Like the known sensor element, the sensor element 2 has a main pumping means constituted by an electrochemical pumping cell which includes the solid electrolyte layer 4a, and an inner pumping electrode 26 and an outer pumping electrode 28 that are formed on the respective inner and outer surfaces of the solid electrolyte layer 4a. By a pumping operation of the pumping means or electrochemical pumping cell, the oxygen in the atmosphere in the first space 10 is pumped out into an external space outside the sensor element 2, or the oxygen existing in the external space is pumped into the first space 10, so that the oxygen concentration (partial pressure) in the first space 10 is controlled to a value depending upon the amount of the desired gas component in the measurement gas to be detected. In Fig. 2, reference numeral 28a denotes a lead extending from the outer pumping electrode 28 to the proximal end of the sensor element 2.

In the main pumping means described above, the inner pumping electrode 26 and the outer pumping electrode 28 are generally porous cermet electrodes, which are formed of a material consisting of a metal such as Pt and a ceramic material such as ZrO₂, for example. The inner pumping electrode 26 located within the first space 10 exposed to the measurement gas is required to be formed of a material which does not cause a change of the desired gas component in the measurement gas. Where the sensor element 2 is used to measure a nitrogen oxide (NOx: NO₂, NO) contained in the measurement gas, for example, the inner pumping electrode 26 is required to be formed of a material having a reduced ability or no ability to reduce the nitrogen oxides. For instance, the inner pumping electrode 26 is formed of a compound having a perovskite structure such as La₃CuO₄, a cermet material consisting of a metal such as Au having a low catalytic activity and a ceramic material, or a cermet material consisting of a metal such as Au having a low catalytic activity, a metal of the platinum (Pt) group and a ceramic material.

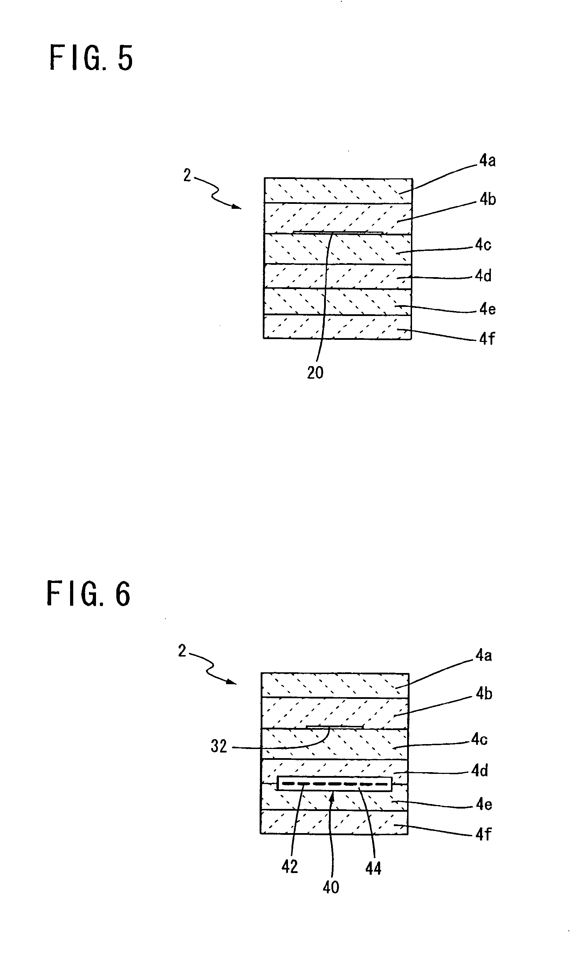

The present sensor element 2 further has a third partition wall 30 which substantially separates the first space 10 and the second space 12 from each other and which is a portion of the solid electrolyte layer 4b. As shown in Figs. 1 and 6, the third partition wall 30 is also integrally fixed at its upper end to the outer solid electrolyte layer 4a, and also contributes an improvement of the mechanical strength of the solid electrolyte layer 4a. Thus, the third partition wall 30 cooperates with the first and second partition walls 18, 22 to increase the mechanical strength of the solid electrolyte layer 4a, thereby effectively reducing or eliminating a risk of cracking of the solid electrolyte layer 4a. The third partition wall 30 is also spaced at its lower end from the solid electrolyte layer 4c, by a predetermined small distance, such that the lower end face of the third partition wall 30 cooperates with the solid electrolyte layer 4c to define a slit which has substantially the same width dimension as the second space 12 and which functions as a third diffusion controlling passage 32. The atmosphere which exists in the first space 10 and the oxygen concentration (partial pressure) of which has been controlled is introduced into the second space 12 through the third diffusion controlling passage 32, under a predetermined diffusion resistance determined by the passage 32.

Within the second space 12, there are formed an auxiliary pumping electrode 34 and a measuring electrode 36. The auxiliary pumping electrode 34 cooperates with the solid electrolyte layer 4a and a suitable outer electrode, for example, the outer pumping electrode 28, to constitute an auxiliary electrochemical pumping cell capable of controlling the oxygen concentration (partial pressure) in the atmosphere within the second space 12. The measuring electrode 36 cooperates with the solid electrolyte layers 4a-4c and a suitable outer electrode, for example, the outer pumping electrode 28, to constitute another electrochemical pumping cell serving as a measurement pumping means for performing a pumping action with respect to oxygen generated by decomposition of the desired gas component in the measurement gas.

Like the inner pumping electrode 26 of the main pumping means, the auxiliary pumping electrode 34 located in the second space 12 is formed of a material having a reduced ability or no ability to reduce the desired gas component in the measurement gas, for example, a nitrogen oxide. For instance, the auxiliary pumping electrode 34 is a porous cermet electrode formed of Pt, ZrO₂ and 1% of Au. The measuring electrode 36 also located in the second space 12 is required to be formed of a material which can causes reduction or decomposition of the desired gas component contained in the atmosphere which exists in the second space 12 and the oxygen concentration (partial pressure) of which has been controlled. That is, the material of the measuring electrode 36 must cause reduction or decomposition of the desired gas component as a result of contact of the material with the gas component. Where the desired gas component is a nitrogen oxide, the measuring electrode 36 may be a porous cermet electrode formed of a cermet material consisting of Rh, Pt and a ceramic material.

The present sensor element 2 further has a reference electrode 38 formed on one of the opposite major surfaces of the solid electrolyte layer 4c which is remote from the measuring electrode 36 or second space 12. The reference electrode 38 is disposed so as to be exposed to the reference air introduced into the reference-air inlet passage 6 described above. The reference electrode 38 cooperates with the solid electrolyte layer 4c and the measuring electrode 36, to constitute an electrochemical sensing cell serving as an oxygen-partial-pressure detecting means for measuring or detecting the oxygen concentration (oxygen partial pressure) in the atmosphere within the first space 10 or second space 12. Described in detail, the oxygen-partial-pressure detecting means is provided to detect the concentration of the desired gas component contained in the measurement gas, on the basis of an electromotive force which corresponds to a difference between the amount of oxygen generated as a result of reduction or decomposition of the desired gas component contained in the atmosphere surrounding the measuring electrode 36, and the amount of oxygen contained in the reference air existing in the reference-air inlet passage 6.

In the present sensor element 2, a plurality of ceramic layers in the form of the solid electrolyte layers 4d-4f are laminated on one side of the solid electrolyte layer 4c which is remote from the internal spaces 8, 10, 12, as shown in Figs. 1 and 4-6, such that a total thickness of the solid electrolyte layers 4c-4f is considerably larger than the thickness of the outer solid electrolyte layer 4a which cooperates with the solid electrolyte layer 4c to define the internal spaces 8, 10, 12. Further, a layer of a heater 40 which is operable to generate heat, with an electric energy supplied from an external power source, is interposed between the two adjacent solid electrolyte layers 4d and 4e. This heater 40 is provided to heat the solid electrolyte layers 4a-4f to an elevated temperature for increasing the oxygen ion conductivity of the solid electrolyte layers 4a-4f. The heater 40 includes a heater element 42, and electrically insulating layers 44 which are formed of aluminum, for example, and which are held in contact with the respective upper and lower surfaces of the heater element 42, to electrically insulate the heater element 42 from the solid electrolyte layers 4d, 4e.

The laminar structure 4c-4f having the considerably larger total thickness than the outer solid electrolyte layer 4a would be likely to suffer from cracking of the outer solid electrolyte 4a due to, in particular, a thermal stress upon heating of the sensor element 2 by the heater 40, if the first, second and third partition walls 18, 22, 30 were not provided. In the present sensor element 2, however, the mechanical strength of the outer solid electrolyte layer 4a is effectively increased by the three partition walls 18, 22, 30 which are integrally fixed at their upper ends to the solid electrolyte layer 4a and which cooperate with the solid electrolyte layer 4c to define the first, second and third diffusion controlling passages 20, 24, 32. Accordingly, the cracking of the outer solid electrolyte layer 4a can be effectively reduced or prevented by the partition walls 18, 22, 30.

The sensor element 2 constructed as described above can be fabricated by a suitable method known in the art to fabricate a gas sensor element having a laminar structure. For example, unfired tapes or green sheets of a solid electrolyte material or materials which give the solid electrolyte layers 4a-4f are laminated on each other, to form an unfired or green laminar structure. To form this green laminar structure, electrode pastes to be fired into the cermet electrodes 26, 28 34, 36, 38 are formed by printing on appropriate surface areas of the two green sheets which give the solid electrolyte layers 4a, 4c. Further, the green sheets which give the solid electrolyte layers 4b and 4c are subjected to pressing operations or any other suitable operations to form openings or cutouts which give the plugging-preventive space 14, buffer space 8, first and second spaces 10, 12 and reference-air inlet passage 6. The two green sheets which give the solid electrolyte layers 4d and 4e are provided with unfired layers which give the heater 40, such that these unfired layers are formed between those two green sheets. In addition, the green sheet which gives the solid electrolyte layer 4b having the first, second and third partition walls 18, 22, 30 is provided on its lower surface with unfired layers of a suitable thickness which give the first, second and third diffusion controlling passages 20, 24, 32. These unfired layers are formed of theobromine or any other suitable material which disappears upon firing of the unfired layers, to form the passages 20, 24, 32. Alternatively, the unfired layers are formed on the upper surface of the green sheet giving the solid electrolyte layer 4c, in contact with the lower surface of the green sheet giving the solid electrolyte layer 4b. The green laminar structure formed by laminating the solid electrolyte layers 4a-4f formed as described above is finally fired into the end product in the form of the sensor element 2.

An experiment conducted on specimens of the sensor element 2 according to the present invention revealed the features.

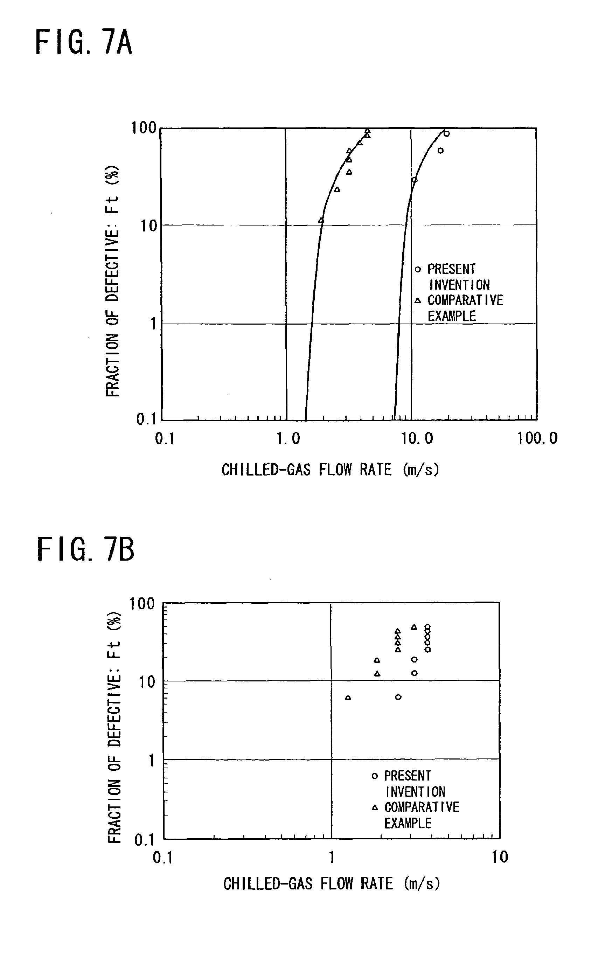

In the experiment, chilled air was blown through a small-diameter nozzle, onto the outer solid electrolyte layer 4a of the specimens of the present sensor element 2, at positions A and B indicated in Fig. 2, to cool the corresponding local spots of the solid electrolyte layer 4a. The rate of flow or blow of the chilled air onto the local spots was increased until cracking takes place at the local spots. Specimens of a comparative sensor element were prepared. The comparative sensor element is similar in construction to the present sensor element 2, except in that the first, second and third partition walls are not fixed to the solid electrolyte layer 4a, with two diffusion controlling passages being formed on the respective upper and lower sides of each partition wall, as shown in Fig. 20 of JP-2000-28576A. The specimens of the comparative sensor element were also cooled by blowing the chilled air onto the outer solid electrolyte layer. The graph of Fig. 7A indicates a relationship between a fraction of defective (Ft) and the rate of flow of the chilled air, where the chilled air was blown onto the local spot corresponding to the position A, while the graph of Fig. 7B indicates the relationship at the local spot corresponding to the position B.

It will be understood from the graphs of Figs. 7A and 7B that the rates of flow of the chilled air at which the cracking took place on the outer solid electrolyte layer 4a were considerably higher in the sensor element 2 of the present invention, than in the comparative sensor element wherein the partition walls are not integrally fixed to the solid electrolyte layer 4a. This superiority of the present sensor element 2 is considered to be attributed to the first, second and third partition walls 18, 22, 30 which partially define the buffer space 8, first and second spaces 10, 12, and the first, second and third diffusion controlling passages 20, 24, 32, and which are integrally fixed at their upper ends to the outer solid electrolyte layer 4a.

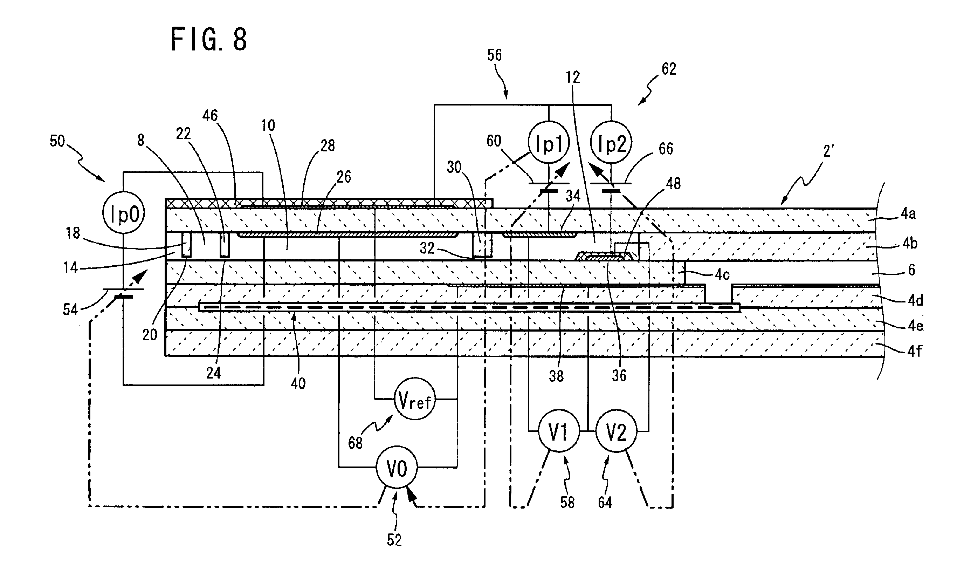

The sensor element 2 according to the present invention constructed to reduce or eliminate a risk of its cracking is suitably used for a gas sensor arranged to measure the amounts of oxides such as NO, NO₂, SO₂, CO₂ and H₂O or combustible gases such as CO and CnHm, which are contained in an exhaust emission from a vehicular engine. Referring to Fig. 8, there is shown an example of such a gas sensor in the form of a nitrogen oxide sensor (an NOx sensor).

The nitrogen oxide sensor shown in Fig. 8 uses the sensor element 2 described above, and includes a control system and a measuring system which are associated with the sensor element 2, as indicated in the figure. In the present nitrogen oxide sensor, the outer pumping electrode 28 is covered by a porous protective layer 46 which is formed of alumina, for example, and which functions to protect the outer pumping electrode 28 from the measurement gas existing in the external space outside the sensor element 2'. The measuring electrode 36 located within the second space 12 is covered by a diffusion controlling layer 48 in the form of a porous alumina layer, for example. The diffusion controlling layer 48 has a predetermined resistance to diffusion of the atmosphere having an oxygen concentration controlled in the second space 12, so that the measuring electrode 36 contacts the atmosphere under the predetermined diffusion resistance.

In the present nitrogen oxide sensor, the solid electrolyte layer 4a and the inner and outer pumping electrodes 26, 28 cooperate to constitute an electrochemical pumping cell, that is, a main pumping cell 50, and the solid electrolyte layers 4a-4c and the inner pumping and reference electrodes 26, 38 cooperate to constitute an electrochemical sensing cell, that is, an oxygen-partial-pressure detecting cell 52 for detecting the oxygen concentration (oxygen partial pressure) in the first space 10, to control the main pumping cell 50. Reference numeral 54 denotes a variable power source for driving the main pumping cell 50.

Further, the solid electrolyte layer 4a and the outer pumping and auxiliary pumping electrodes 28, 34 cooperate to constitute another electrochemical pumping cell, that is, an auxiliary pumping cell 56 for controlling the oxygen partial pressure in the atmosphere in the second space 12, and the solid electrolyte layers 4a, 4b, 4c and the auxiliary pumping and reference electrodes 34, 38 cooperate to constitute another electrochemical sensing cell, that is, an oxygen-partial-pressure detecting cell 58 for detecting the oxygen partial pressure in the second space 12, to control the auxiliary pumping cell 56. The auxiliary pumping cell 56 is driven by a variable power source 60 the voltage of which is controlled by the oxygen-partial-pressure detecting cell 58. A pumping current Ip1 of the auxiliary pumping cell 56 is used to control an electromotive force V1 of the oxygen-partial-pressure detecting cell 52.

Further, the solid electrolyte layers 4a, 4b, 4c and the outer pumping and measuring electrodes 28, 36 cooperate to constitute an electrochemical pumping cell, that is, a measurement pumping cell 62 for pumping out oxygen generated by decomposition of the desired nitrogen oxide contained in the atmosphere surrounding the measuring electrode 36, to detect the amount of the oxygen generated. In addition, the solid electrolyte layers 4a, 4b, 4c and the measuring and reference electrodes 36, 38 cooperate to constitute another electrochemical sensing cell, that is, an oxygen-partial-pressure detecting cell 64 for detecting the oxygen partial pressure in the atmosphere surrounding the measuring electrode 36. The measurement pumping cell 62 is driven by a variable power source 66 the voltage of which is controlled on the basis of an electromotive force V2 detected by the oxygen-partial-pressure detecting cell 64. A pumping current Ip2 of the measurement pumping cell 62 corresponds to the concentration of the desired nitrogen oxide contained in the measurement gas.

In addition, the solid electrolyte layers 4a, 4b and 4c and the outer pumping and reference electrodes 28, 38 cooperate to constitute an electrochemical sensing cell 68 an electromotive force Vref of which is used to detect the oxygen partial pressure (concentration) in the measurement gas in the external space outside the sensor.

The present nitrogen oxide sensor detects the concentration of the desired nitrogen oxide contained in the measurement gas, in the following manner. Initially, the external measurement gas is fed from the plugging-preventive space 14 formed in the distal end portion of the sensor element 2', into the buffer space 8 through the first diffusion controlling passage 20 formed between the lower end face of the first partition wall 22 and the solid electrolyte layer 4c. The atmosphere in the buffer space 8 is introduced into the first space 10 through the second diffusion controlling passage 24 formed between the lower end face of the second partition wall 22 and the solid electrolyte layer 4c. The voltage of the variable power source 54 is controlled such that an electromotive force V0 of the oxygen-partial-pressure detecting cell 52 is held constant, so that a pumping current Ip0 of the main pumping cell 50 is controlled. The oxygen partial pressure in the atmosphere in the first space 10 is controlled to a predetermined value, for example, about 10⁻⁷atm.

The atmosphere is introduced from the first space 10 into the second space 12 through the third diffusion controlling passage 32 formed between the lower end face of the third partition wall 30 and the solid electrolyte layer 4c. The oxygen in the second space 12 is subjected to a pumping operation of the auxiliary pumping cell 56 with an electric energy supplied from the variable power source 60, the voltage of which is controlled on the basis of the electromotive force V1 detected by the oxygen-partial-pressure detecting cell 58. As a result, the oxygen partial pressure in the second space 12 is controlled to a low value at which the measurement of the desired nitrogen oxide is not substantially influenced. The pumping current Ip 1 of the auxiliary pumping cell 56 is applied as a control signal to the oxygen-partial-pressure detecting cell 52, to control the electromotive force V0 of the detecting cell 52, so that the oxygen partial pressure in the atmosphere in the second space 12 is controlled such that the gradient of the oxygen partial pressure is held constant in a portion of the second space 12 between the third diffusion controlling passage 32 and the auxiliary pumping electrode 34.

The atmosphere in the second space 12 the oxygen partial pressure has been controlled reaches the measuring electrode 36 through the diffusion controlling layer 48, under the predetermined diffusion resistance. The nitrogen oxide in the atmosphere surrounding the measuring electrode 36 is reduced or decomposed, with a result of generation of oxygen. The oxygen thus generated is pumped out by the measurement pumping cell 62, while the voltage of the variable power source 66 is controlled such that the electromotive force V2 of the oxygen-partial-pressure detecting cell 64 is held constant. In this respect, it is noted that the amount of oxygen generated around the measuring electrode 36 is proportional to the concentration of the desired nitrogen oxide (NOx) in the measurement gas, so that the concentration of the nitrogen oxide can be calculated on the basis of the pumping current Ip2 of the measurement pumping cell 62.

While one embodiment of the sensor element of this invention and one example of the gas sensor in the form of the nitrogen oxide sensor using the sensor element have been described in detail, for illustrative purpose only, it is to be understood that the present invention is not limited to the details of the illustrated embodiment and example, and that the present invention may be embodied with various changes, modifications and improvements, which may occur to those skilled in the art, without departing from the spirit and scope of the invention defined in the appended claims.

Although the sensor element 2 according to the illustrated embodiment has the plugging-preventive space 14 between the gas inlet 16 and the first partition wall 18, the provision of this plugging-preventive space 14 is not essential. That is, the first partition wall 18 may be formed such that the inlet end of the first diffusion controlling passage 20 is located at the gas inlet 16. The configuration of the second and third diffusion controlling passages 24, 32 is not limited to that in the illustrated embodiment.

It will be understood that the gas sensor element according to the present invention can be suitably used for not only a sensor for measuring the amount of nitrogen oxide (NOx) contained in the measurement gas, but also sensors for measuring the amounts of desired components other than NOx, which are influenced by oxygen existing in the measurement gas and contain bound oxygen, for example, for sensors for measuring the amounts of H₂O and CO₂. For instance, the gas sensor element of the invention can be suitably used for a gas sensor including an oxygen pump operable to pump out O₂ generated by electrolysis of CO₂ or H₂O, and a gas sensor using a proton-ion conductive solid electrolyte to perform a pumping action with respect to H₂ generated by electrolysis of H₂O.

## Claims

1. A gas sensor element (2) having a generally elongate laminar structure including at least a first solid electrolyte layer (4a), a second electrolyte layer (4c) and a spacer layer (4b) formed of a solid electrolyte which are laminated on each other, with the spacer layer being interposed between the first and second solid electrolyte layers, said laminar structure having internal spaces which are formed between said first and second solid electrolyte layers and which include a buffer space (8), a first space (10) and a second space (12) that are arranged in the order of description in a direction from a distal end of the gas sensor element toward a proximal end of the same, said laminar structure further having a gas inlet (16) which is formed at said distal end and through which an external measurement gas is introduced into said buffer space, a first diffusion controlling passage (20) in the form of a slit through which the external measurement gas is introduced into said buffer space from the gas inlet, a second diffusion controlling passage (24) in the form of a slit through which an atmosphere in said buffer space is introduced into said first space, and a third diffusion controlling passage (32) in the form of a slit through which an atmosphere in said first space is introduced into said second space, **characterized in that**:
said buffer space and said first and second spaces have a thickness substantially equal to a thickness of said spacer layer and extending in a longitudinal direction of the gas sensor element, with a predetermined width dimension, said generally elongate laminar structure including a first partition wall (18) which substantially separates said gas inlet (16) and said buffer space (8) from each other and which is integrally fixed to said first solid electrolyte layer (4a), said first partition wall and said second solid electrolyte layer cooperating to define therebetween said first diffusion controlling passage (20) which extends in a direction of width of the gas sensor element.

2. The gas sensor element according to claim 1, wherein said laminar structure further has a plugging-preventive space (14) which is formed between said first and second solid electrolyte layers and which has a thickness substantially equal to the thickness of said spacer layer, said plugging-preventive space being open through said gas inlet to an external space in which said external measurement gas exists, said first partition wall substantially separating said plugging-preventive space and said buffer space from each other.

3. The gas sensor element according to claim 1 or 2, wherein said laminar structure further includes a second partition wall (22) which substantially separates said buffer space and said first space from each other and which is integrally fixed to said first solid electrolyte layer, said second partition wall and said second solid electrolyte layer cooperating to define therebetween said second diffusion controlling passage (24) which extends in the direction of width of the gas sensor element.

4. The gas sensor element according to any one of claims 1-3, wherein said laminar structure further includes a third partition wall (30) which substantially separates said first and second spaces from each other and which is integrally fixed to said first solid electrolyte layer, said third partition wall and said second solid electrolyte layer to cooperate therebetween said third diffusion controlling passage which extends in the direction of width of the gas sensor element.

5. The gas sensor element according to any one of claims 1-4, wherein at least one ceramic layer (4d-4f) is laminated on one side of said second solid electrolyte layer (4c) which is remote from said internal spaces, a total thickness value of said second solid electrolyte layer and said at least one ceramic layer being larger than a thickness of said first solid electrolyte layer.

6. The gas sensor element according to any one of claims 1-5, wherein said laminar structure further includes a layer of a heater (40) which is located on one side of said second solid electrolyte layer which is remote from said internal spaces and which is electrically operated to heat at least portions of said first and second solid electrolyte layers and said spacer layer which define said first and second spaces.

7. The gas sensor element according to any one of claims 1-6, wherein said laminar structure has a first inner pumping electrode (26) and a first outer pumping electrode (28) which are formed on respective inner and outer opposite surfaces of a portion of said first solid electrolyte layer (4a) which partially defines said first space, said first solid electrolyte layer and said first inner and outer pumping electrodes cooperating to constitute main pumping means (50) for performing a pumping action, with a control voltage being applied between said first inner and outer pumping electrodes, with respect to oxygen contained in the atmosphere which has been introduced into said first space through said buffer space.

8. The gas sensor element according to any one of claims 1-7, wherein said laminar structure is provided with a second inner pumping electrode (36) and a second outer pumping electrode (28) which are respectively formed inside and outside of said second space, said second inner and outer pumping electrodes cooperating with at least said first solid electrolyte layer (4a) to constitute measurement pumping means (62) for performing a pumping action, with respect to oxygen generated by reduction or decomposition of a desired gas component contained in the atmosphere which has been introduced from said first space into said second space.

9. The gas sensor element according to any one of claims 1-7, wherein said laminar structure is provided with an inner measuring electrode (36) and an outer measuring electrode (38) which are respectively formed inside and outside of said second space, said inner and outer measuring electrodes cooperating with at least said second solid electrolyte layer (4c) to constitute oxygen-partial-pressure detecting means (52) operable to generate an electromotive force corresponding to a difference between an amount of oxygen generated by reduction or decomposition of a desired gas component contained in the atmosphere which has been introduced from said first space into said second space, and an amount of oxygen contained in a reference gas.

10. The gas sensor element according to claim 7, wherein said laminar structure is provided with a pair of auxiliary pumping electrodes (34, 28) which are respectively formed inside and outside of said second space, said pair of auxiliary pumping electrodes cooperating with at least said first solid electrolyte layer (4a) to constitute auxiliary pumping means (56) for performing a pumping action, with an auxiliary pumping current applied between said pair of auxiliary electrodes, with respect to oxygen contained in said measurement gas which has been subjected to said pumping action of said main pumping means.

11. A nitrogen oxide sensor including a gas sensor element (2) as set forth in any one of claims 1-10, for measuring an amount of a nitrogen oxide component contained in an external measurement gas.
